Europäisches Patentamt

European Patent Office

Office européen des brevets

(11) Veröffentlichungsnummer: **0 396 988**
**A2**

(12) **EUROPÄISCHE PATENTANMELDUNG**

(21) Anmeldenummer: 90108152.1

(22) Anmeldetag: 28.04.90

(51) Int. Cl.⁵: **C04B 20/10**

(30) Priorität: 12.05.89 DE 3915497

(43) Veröffentlichungstag der Anmeldung:
14.11.90 Patentblatt 90/46

(84) Benannte Vertragsstaaten:
**AT BE DE ES FR GB IT NL SE**

(71) Anmelder: **BAYER AG**

**D-5090 Leverkusen 1 Bayerwerk(DE)**

(72) Erfinder: **Freudenberg, Bernard, Dr.**
**Sesslacher Weg 11**
**D-8630 Coburg(DE)**
Erfinder: **Thometzek, Peter, Dr., c/o Bayer**
**Italia S.P.A. Div**
**AC-PK, Centre Sviluppo Ceramica**
**I-41040 Spezzano di Fiorano (MI)(IT)**

(54) **Aluminiumoxidpulver mit verbesserten Verarbeitungseigenschaften, Verfahren zu ihrer Herstellung sowie deren Verwendung.**

(57) Die vorliegende Erfindung betrifft neue Aluminiumoxidpulver mit verbesserten Verarbeitungseigenschaften, Verfahren zu ihrer Herstellung sowie deren Verwendung.

## Aluminiumoxidpulver mit verbesserten Verarbeitungseigenschaften, Verfahren zu ihrer Herstellung sowie deren Verwendung

Die vorliegende Erfindung betrifft neue Aluminiumoxidpulver mit verbesserten Verarbeitungseigenschaften, Verfahren zu ihrer Herstellung sowie deren Verwendung.

An Aluminiumoxidpulver, die vorzugsweise zur Herstellung keramischer Massen bzw. Formkörper dienen, werden hohe Anforderungen hinsichtlich Qualitätskonstanz und Verarbeitungsfreundlichkeit gestellt. Zur Herstellung von keramischen Bauteilen werden zunächst Pulver hergestellt, diese dann durch geeignete Formgebungsverfahren in sogenannte Grünkörper überführt und in einem weiteren Schritt zur fertigen Keramik gesintert. Neben dem Pressen und Spritzgießen hat sich insbesondere das Schlickergießen als geeignetes Formgebungsverfahren erwiesen. Die Aluminiumoxidteilchen müssen in wäßrigen Schlickern leicht dispergierbar sein. Weiterhin ist man an einer möglichst niedrigen Ausgangsviskosität interes siert, um hochkonzentrierte Schlicker herstellen zu können. Die Pulverteilchen sollen vollkommen desagglomeriert vorliegen; Entmischungen, Ausschwimmen oder Flockung dürfen nicht auftreten.

Besonders schwierig sind diese Anforderungen im Fall von Oxidkeramiken mit zwei oder mehr unterschiedlichen oxidischen Komponenten zu erreichen, wie z.B. der Aluminiumtitanat- oder der Mullitkeramik. So neigen Aluminiumtitanat-Schlicker, die z.B. die Oxide, $TiO_2$, $Al_2O_3$ und $SiO_2$ enthalten, häufig zu unerwünschten Flockungen. Hierdurch wird die Verarbeitbarkeit der Dispersion erschwert sowie die Qualität des Grünkörpers negativ beeinflußt.

Aufgabe der vorliegenden Erfindung ist es, Aluminiumoxidpulver mit verbesserten Verarbeitungseigenschaften und im besonderen Dispergiereigenschaften zur Verfügung zu stellen.

Überraschenderweise wurde nun gefunden, daß Aluminiumoxidpulver mit einem isoelektrischen Punkt (IEP) von gleich und < pH 7 diese Anforderung erfüllen. Die isoelektrischen Punkte unbehandelter Aluminumoxidqualitäten weisen Werte zwischen pH 8 und 10 auf.

Gegenstand der vorliegenden Erfindung sind Aluminiumoxidpulver mit verbesserten Verarbeitungseigenschaften, deren Wert für den isoelektrischen Punkt gleich oder < pH 7 ist.

Die isoelektrischen Punkte von Pigmenten lassen sich durch elektrophoretische Messungen bestimmen (Thomas M. Riddick, Control of Colloid Stability Through Zetapotential, 1968, New York).

Die Messung wird dabei an hochverdünnten Lösungen (0,001 g Pigment in 50 ml Losung von $10^{-3}$ m x $dm^{-3}$ $KNO_3$) ausgeführt. Hierzu wird am Meßgerät PEN KEM-System 3000 der Firma PEN KEM Inc., Bedford Hills, New York, eine Messung der elektrophoretischen Beweglichkeit µ's per V'/cm im Bereich zwischen pH 1 und 14 ausgeführt, wobei der pH-Wert der Lösung jeweils mit $HNO_3$, NaOH eingestellt wird. Die elektrophoretische Beweglichkeit wird graphisch als Funktion des pH-Wertes aufgetragen. Der Schnittpunkt dieser Kurve mit der pH-Achse wird als isoelektrischer Punkt bezeichnet.

Es wurde weiterhin gefunden, das solche Aluminumoxide einen isoelektrischen Punkt gleich oder < pH 7 aufweisen, deren Oberflächen Verbindungen, vorzugsweise Oxide, Oxidhyrate und/oder Hydroxide, der Elemente aus der Gruppe Si, Ti, Zr, Sn, Fe enthalten. Ebenso sind durchdotierte Verbindungen denkbar; eine Beschichtung ist aber aus Kostengründen zu bevorzugen.

Die erfindungsgemäßen Aluminumoxidpulver zeigen sehr gute Dispergiereigenschaften in Wasser sowie organischen Lösungs- und Bindemitteln.

Besonders vorteilhaft ist ihr Einsatz in mehrkomponentigen Oxidschlickern, wie z.B. Schlicker für die Aluminiumtitanat- bzw. Mullitkeramik. Sie bewirken z.B. mit $SiO_2$ beschichtete Aluminiumoxidpulver keine Heterokoagulation mit weiteren Komponenten, wie $SiO_2$ und/oder $TiO_2$, mehr, liefern niedrige Viskositäten und ermöglichen die Verarbeitung hoch konzentrierter Schlicker. Bei Verwendung von Verflüssigern ist deren Verbrauch deutlich geringer.

Als weiterer Vorteil neben der niedrigeren Grund- sowie Strukturviskosität der Schlicker beobachtet man beim Naßmahlen einen wesentlich geringeren Mahlkugelabrieb als beim Einsatz handelsüblicher Alumiumoxidpulver. Beim Schlickergießen ist die Scherbenbildungsgeschwindigkeit höher, beim anschließenden Brennprozeß die Sintergeschwindigkeit niedriger.

Die genannten Elemente sind in Mengen von 0,1-4 Mol-%, bevorzugt 0,2-2 Mol-%, bezogen auf den $Al_2O_3$-Gehalt, wirksam. Dabei ist wichtig, daß die erfindungsgemäße Beschichtung chemisch an die $Al_2O_3$-Oberfläche gebunden ist, also nicht lediglich durch van-der-Waals-Kräfte. Hierdurch wird eine ausreichende Lagerstabilität sowie Redispergierbarkeit auch für trocken gelagerte Pulver gewährleistet.

In einer bevorzugten Ausführungsform beträgt der $Al_2O_3$-Gehalt der erfindungsgemäßen Pulverkomponente über 90 Gew.-%. Es können jedoch auch beschichtete Aluminiumhydroxid-, Aluminiumoxidhydrat- bzw. Aluminiumoxidverbindungen mit kleineren $Al_2O_3$-Gehalten Anwendung finden.

In einer weiteren bevorzugten Ausführungsform weisen die Aluminiumoxidpulver eine $D_{50}$-Teilchengrö-

ße <3 $\mu$m, vorzugsweise <1 $\mu$m auf.

Gegenstand der vorliegenden Erfindung sind auch Verfahren zur Herstellung der erfindungsgemäßen Aluminiumoxidpulver.

Die Beschichtung der Aluminumoxidpulver kann aus einer Einzelkomponente oder aus einer gewünschten Verbindung der Elemente aus der Gruppe Si, Ti, Zr, Sn, Fe bestehen. Überraschenderweise wurde gefunden, daß man zu einem schwerlöslichen Überzug der genannten Verbindungen durch einfache Verfahren, wie Aufsprühen, Auffällen und/oder Aufmahlen, gelangt.

Besonders die bevorzugte Ausführungsform des Aufsprühens und anschließenden Aufmahlens in einer Strahlmühle hat den großen Vorteil, nicht mehr über eine Naßphase gehen zu müssen und somit störende Agglomerationen beim anschließenden Trocknen zu vermeiden.

Zum Aufsprühen der genannten Elemente werden vorzugsweise metallorganische Verbindungen, wie z.B. Alkoholate, Aminalkoholate, Salze von Carbonsäuren, auch OH-funktionellen Carbonsäuren und/oder Sole, bestehend aus Kolloidteilchen der entsprechenden Elemente, in einer Menge von 0,1-4 Mol-%, bezogen auf den $Al_2O_3$-Gehalt eingesetzt. Die Mahlung erfolgt vorzugsweise in trockenem Zustand, indem man das Aluminumoxidpulver und die metallorganischen Verbindungen bzw. die Sole gleichzeitig mit einem fluiden Mahlmedium, wie Dampf oder Luft, in die Mühle einführt, so daß der Kontakt der Pulverteilchen untereinander das Vermahlen auf die gewünschte Feinkörnigkeit zur Folge hat.

Die Zusatzstoffe können entweder von Hand oder mittels einer geeigneten Fördereinrichtung, wie einer Vibrationsfördereinrichtung, in fester Form zu dem $Al_2O_3$-Pulver zugesetzt werden, bevor dieses in die Mühle eingebracht wird.

Es hat sich als vorteilhaft erwiesen, den Zusatzstoff jedoch in flüssiger Form, d.h. im Fall der metallorganischen Verbindung direkt oder z.B. in alkoholischer Lösung und im Fall des Sols als wäßrige, kolloidale Suspension einzusetzen.

Während des Vermahlens in der Strahlmühle bewirkt die erhöhte Temperatur einerseits eine Verteilung des Zusatzstoffes auf der Oberfläche der $Al_2O_3$-Teilchen, andererseits beim Einsatz von metallorganischen Verbindungen, wie Alkoholaten eine hydrolytische Spaltung in Oxid und organischen Rest, wobei das Oxid an der $Al_2O_3$-Oberfläche chemisch fixiert und der organische Rest mit dem fluiden Mahlmedium ausgetragen wird.

Zusätzlich zu der Verbindung der Elemente Si, Ti, Zr, Fe und/oder Sn kann dem $Al_2O_3$-Pulver vor der Mahlung ein geeignetes Mahlhilfsmittel, wie z.B. ein Glykol in einer Menge von 0,05-3 %, vorzugsweise 0,1-0,6 %, bezogen auf den $Al_2O_3$-Gehalt zugegeben werden.

In einer weiteren Ausführungsform werden direkt Verbindungen, die sich aus den Elementen Si, Ti ,Zr, Fe und/oder Sn und einem geeigneten Mahlhilfsmittel zusammensetzen, wie z.B. Triethanolaminate, eingesetzt, wobei der Gehalt an Elementen der Gruppe Si, Ti, Zr, Sn, Fe im Endprodukt 0,1-4 Mol-%, bevorzugt 0,2-2 Mol-%, bezogen auf den $Al_2O_3$-Gehalt beträgt.

Man erhält sehr gut dispergierbare, überkornarme Aluminiumoxidprodukte mit einem isoelektrischen Punkt gleich oder < pH 7.

Vorzugsweise besteht die Beschichtung der Aluminumoxidpulver aus Hydroxiden, Oxidhydraten, Oxiden bzw. teilweise oder ganz aus den genannten metallorganischen Verbindungen der Elemente Si, Ti, Zr, Sn, Fe. Sie kann aber auch aus anderen schwer löslichen Verbindungen bestehen, z.B. aus Carbonaten, Phosphaten usw., sofern sie den isoelektrischen Punkt in den Bereich $\leq$ pH 7 erniedrigen.

Gegenstand dieser Erfindung ist auch die Verwendung der erfindungsgemäßen Aluminiumoxidpulver zur Herstellung von keramischen Massen und Bauteilen. Interessante Einsatzgebiete sind z.B. die Herstellung von hochfeuerfesten Massen und Sinterformkörpern auf der Basis von Aluminiumoxid und/oder Mullit bzw. die Herstellung von Katalysatoren bzw. die Herstellung von Sinterformkörpern mit ausgezeichneten Wärmedämmungseigenschaften auf der Basis von Aluminiumtitanat, auch im Verbund mit metallischen Trägern.

Eine bevorzugte Verwendung der erfindungsgemäßen Pulver ist die Herstellung von keramischen Werkstoffen und Bauteilen, ausgehend von mehrkomponentigen Rohstoffmischungen.

Im folgenden wird die Erfindung beispielhaft erläutert, ohne daß hierin eine Einschränkung zu sehen ist.

Beispiel 1

$Al_2O_3$ der Firma Martinswerk wird mit 1,73 Gew.-% Siliciumtetraethylester, bezogen auf den $Al_2O_3$-Gehalt, besprüht und das Gemisch auf einer Dampfstrahlmühle gemahlen. Das neue Pulver weist folgende Spezifikationen auf:

$Al_2O$ : 99,2 %

$SiO_2$ : 0,5 %

C : 0,01 %

BET-Oberfläche : 6,5 $m^2/g$

$D_{50}$-Teilchengröße : 0,98 $\mu$m

isoelektrischer Punkt: pH 4,5

Sekundärionen-Massenspektrometer-Untersuchungen beweisen die Si-Umhüllung der $Al_2O_3$-Teilchen.

Das Produkt zeigt ausgezeichnete Dispergiereigenschaften in wäßrigen Suspensionen, die auch durch wochenlange Lagerung nicht verschlechtert werden. (Weitere Beispiele für erfindungsgemäße $Al_2O_3$-Pulver siehe Tabelle 1).

Beispielhaft wird das erfindungsgemäße $Al_2O_3$-Pulver zu einer Aluminiumtitanat-Keramik nach der deutschen Patentanmeldung P 3 814 079 verarbeitet. Die Rohstoffe werden so eingewogen, daß die Rohstoffmischung 56,3 Gew.-% $Al_2O_3$, 39,3 Gew.-% $TiO_2$, 2,4 Gew.-% $SiO_2$ und 2 Gew.-% $Fe_2O_3$ enthält. Der wäßrige Schlicker, Fest stoffgehalt 70 Gew.-%, mit einem alkalifreien Dispergiermittel auf der Basis einer Polycarbonsäure, wird in einer 3-1-Mühle aus Hartporzellan, gefüllt mit 2,8 kg 85 %igen $Al_2O_3$-Mahlkugeln, 12 h gemahlen. Nach Ermittlung der Schlickerdaten wird er in Gipsformen vergossen.

### Beispiel 2:

Die Rohstoffmischung enthält ein unbeschichtetes $Al_2O_3$ der Firma Martinswerk mit einem isoelektrischen Punkt von pH 7,8.

### Beispiel 3:

Die Rohstoffmischung enthält das in Beispiel 1 beschriebene $Al_2O_3$ mit Siliciumbeschichtung und einem isoelektrischen Punkt von pH 4,5.

Die Schlickerparameter sowie die Gründichte sind Tabelle 2 zu entnehmen. Der Einsatz des erfindungsgemäßen $Al_2O_3$-Pulvers bewirkt eine Herabsetzung der optimalen Verflüssigerkonzentration, der Strukturviskosität, der spezifischen elektrischen Leitfähigkeit und des Mahlkugelabriebs. Auch die erhaltene höhere Gründichte beweist die bessere Desagglomeration im Schlicker.

Tabelle 1

| Isoelektrische Punkte handelsüblicher Aluminiumoxidpulver im Vergleich mit den erfindungsgemäßen, beschichteten Aluminiumoxidpulvern | | |
|---|---|---|
| Hersteller | Beschichtung (Gew.-%) | IEP (pH) |
| VAW | - | 8,1 |
| Martinswerk | - | 7,8 |
| Alcoa | - | 9,3 |
| Neue Produkte: | | |
| 1 | 0,5 $SiO_2$ | 4,5 |
| 2 | 1,0 $SiO_2$ | 3,0 |
| 3 | 2,0 $SiO_2$ | 1,7 |
| 4 | 1,0 $TiO_2$ | 5,9 |
| 5 | 1,0 $ZrO_2$ | 5,5 |
| 6 | 1,0 $SnO_2$ | 5,8 |
| 7 | 1,0 $Fe_2O_3$ | 6,8 |

4

Tabelle 2

| | optimale Verflüssigerkonzentration (g Wirksubstanz/100 g Feststoff) | Brookfield-Viskositäten Spindel 1 | | | spezifische elektrische Leitfähigkeit (mS/cm) | Gründichte (g/cm$^3$) | Mahlkugelabrieb (g/12 h) |
|---|---|---|---|---|---|---|---|
| | | 0,3 UpM (mPas) | 3 UpM | 30 UpM | | | |
| **Beispiel 2** | | | | | | | |
| $Al_2O_3$-Martinswerk $X_{50} < 1\ \mu m$ unbeschichtet, IEP pH 7,8 | 0,3 | 3500 | 800 | 200 | 1,26 | 2,27 | 0,65 |
| $TiO_2$ $X_{50} < 0,5\ \mu m$ $SiO_2$ $X_{50} < 0,3\ \mu m$ $Fe_2O_3$ $X_{50} < 0,3\ \mu m$ | | (Werte interpoliert) | | | | | |
| **Beispiel 3** | | | | | | | |
| $Al_2O_3$ modifiziert $X_{50} < 1\ \mu m$, mit 0,5 % $SiO_2$ beschichtet, IEP pH 4,5 $TiO_2$, $SiO_2$, $Fe_2O_3$ wie Beispiel 2 | 0,1 | 220 | 110 | 55 | 0,55 | 2,36 | 0,15 |

EP 0 396 988 A2

**Ansprüche**

1. Aluminumoxidpulver mit verbesserten Verarbeitungseigenschaften, im besonderen Dispergiereigenschaften, dadurch gekennzeichnet, daß der isoelektrische Punkt der Pulver gleich oder pH <7 beträgt.

2. Aluminiumoxidpulver, gemäß Anspruch 1, dadurch gekennzeichnet, daß sie eine Beschichtung aufweisen, die aus Verbindungen einer oder mehrerer Elemente der Gruppe Si, Ti, Zr, Sn, Fe besteht.

3. Aluminiumoxidpulver gemäß einem der Ansprüche 1 und 2, dadurch gekennzeichnet, daß die Menge der Elemente der Gruppe Si, Ti, Zr, Sn, Fe 0,1-4 Mol-%, bevorzugt 0,2-2 Mol-%, bezogen auf den $Al_2O_3$-Gehalt der Aluminiumoxidpulver, beträgt.

4. Aluminiumoxidpulver gemäß einem oder mehrerer der Ansprüche 1 bis 3, dadurch gekennzeichnet, daß die Beschichtung Oxide, Oxidhydrate und/oder Hydrate der Elemente aus der Gruppe Si, Ti, Zr, Sn, Fe enthalten.

5. Aluminiumoxidpulver gemäß einem oder mehrerer der Ansprüche 1 bis 4, dadurch gekennzeichnet, daß die Beschichtung chemisch an die $Al_2O_3$-Oberfläche gebunden ist.

6. Aluminiumoxidpulver gemäß einem oder mehrerer der Ansprüche 1 bis 5, dadurch gekennzeichnet, daß sie einen $Al_2O_3$-Gehalt > 90 Gew.-% aufweisen.

7. Aluminiumoxidpulver gemäß einem oder mehrerer der Ansprüche 1 bis 6, dadurch gekennzeichnet, daß sie eine $D_{50}$-Teilchengröße < 3 μm, bevorzugt < 1 μm, aufweisen.

8. Verfahren zur Herstellung der Aluminiumoxidpulver gemäß einem oder mehrerer der Ansprüche 1-7, dadurch gekennzeichnet, daß auf Aluminiumoxidpulver eine Beschichtung einer oder mehrerer Verbindungen der Elemente Si, Ti, Zr, Sn, Fe durch Aufsprühen, Auffällen und/oder Aufmahlen so vorgenommen wird, daß der Gehalt an Elementen der Gruppe Si, Ti, Zr, Sn, Fe 0,1-4 Mol-%, vorzugsweise 0,2-2 Mol-%, bezogen auf den $Al_2O_3$-Gehalt, beträgt.

9. Verfahren gemäß Anspruch 8, dadurch gekennzeichnet, daß die Verbindungen metallorganische Verbindungen und/oder Sole, bestehend aus kolloidalen Teilchen von Verbindungen der Elemente Si, Ti, Zr, Sn und/oder Fe sind.

10. Verfahren gemäß einem der Ansprüche 8 oder 9, dadurch gekennzeichnet, daß die behandelten Aluminiumoxidpulver in einer Strahlmühle trocken gemahlen werden.

11. Verwendung der Aluminiumoxidpulver gemäß einem oder mehrerer der Ansprüche 1-7 zur Herstellung von keramischen Werkstoffen und/oder Bauteilen.

12. Verwendung der Aluminiumoxidpulver gemäß einem oder mehrerer der Ansprüche 1-7 zur Herstellung von keramischen Werkstoffen und/oder Bauteilen, gefertigt aus mehrkomponentigen Rohstoffmischungen.